Europäisches Patentamt

(19) European Patent Office

Office européen des brevets

(11) EP 1 157 612 B1

(12) EUROPEAN PATENT SPECIFICATION

(45) Date of publication and mention
of the grant of the patent:
**06.10.2004 Bulletin 2004/41**

(21) Application number: **00985878.8**

(22) Date of filing: **26.12.2000**

(51) Int Cl.[7]: **A01N 25/12**, A01N 43/50,
A01N 47/26, A01N 43/40,
A01N 43/66, A01N 47/04,
A01N 47/28, A01N 37/52,
A01N 47/34, A01N 43/54,
A01N 37/50

(86) International application number:
**PCT/JP2000/009225**

(87) International publication number:
**WO 2001/047355 (05.07.2001 Gazette 2001/27)**

(54) **GRANULAR WATER-DISPERSIBLE AGENTS AND PROCESS FOR PRODUCING THE SAME**

GRANULÄRE WASSERDISPERGIERBARE VERBINDUNGEN UND VERFAHREN FÜR IHRE HERSTELLUNG

AGENTS GRANULAIRES DISPERSIBLES DANS L'EAU, ET PROCEDE DE PREPARATION CORRESPONDANT

(84) Designated Contracting States:
**AT BE CH CY DE DK ES FI FR GB GR IE IT LI LU MC NL PT SE TR**

(30) Priority: **28.12.1999 JP 37495799**
**29.02.2000 JP 2000057950**

(43) Date of publication of application:
**28.11.2001 Bulletin 2001/48**

(73) Proprietor: **NIPPON SODA CO., LTD.**
**Chiyoda-ku, Tokyo 100-8165 (JP)**

(72) Inventor: **SUZUKI, Masahiro,**
**Nippon Soda Co., Ltd.**
**Tokyo 100-8165 (JP)**

(74) Representative: **Schmitz, Jean-Marie et al**
**Dennemeyer & Associates S.A.**
**P.O. Box 1502**
**1015 Luxembourg (LU)**

(56) References cited:
**EP-A- 0 853 883          EP-A2- 0 141 509**
**WO-A1-97/46093         FR-A- 2 595 544**
**JP-A- 3 120 201          JP-A- 3 146 126**
**JP-A- 53 050 333         JP-A- 63 066 101**
**JP-B1- 40 016 587        US-A- 5 001 150**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention is related to a water dispersible granule formulation of agricultural chemicals and a process for producing said water dispersible granule formulation.

Until today, active components to be used as an agricultural chemical having insecticidal, fungicidal or herbicidal activity have been formulated into a wettable powder, an emulsifiable concentrate, a suspension concentrate, dust, etc. and have been used in such a formulation form depending upon the physical and chemical property and the application purpose. However, among the formulation types described above, an emulsifiable concentrate has a problem of environmental pollution caused by organic solvents contained therein, and a suspension concentrate has a problem of easily causing separation of the components into phases during the preservation for a long time since the active ingredient(s) is dispersed in an aqueous solvent used for the formulation. Further, a wettable powder formulation and a powder formulation has a problem in safety for human bodies as they easily cause the dusting at the production process and at the places to practically use them. Due to such problems, several water dispersible granule formulations have been provided recently in order to settle such problems.

Normally, the water dispersible granule formulation is prepared according to so-called extrusion method, which is combining a solid active ingredient, a carrier comprising minerals in fine powder, surface active agents, etc., pulverizing the combined mixture by using a dry mill, then adding bound water to the mixture and kneading the mixture by using a kneader, and forcibly extruding the kneaded mixture to pass it through a multiporous plate containing a plurality of pores with the diameter of 0.5 -2.0 mm.

However, if the active ingredient has a low melting point, or if the active ingredient has a peculiar property of being hardly pulverized into fine particles, dry milling method has not been applicable for such use.

In addition, in case of dry milling method, the particle size of the pulverized components in a formulation is normally in a range of from 5 to 20 μm, thus it is difficult to pulverize the components into a size ranging from 3 to 5 μm or less so that there is a problem that the dry milling method cannot be used for the production of the water dispersible granule, particularly when the active ingredient has a low melting point, or the active ingredient is required to be pulverized into fine particles ranging from 3 to 5 μm or less in order to enhance the biological activity.

Generally, contacting area of an active ingredient with a growing plant gets small when the particle size of the active ingredient is coarse, and the total amount of the active ingredient attached onto vegetable leaves is reduced. For example of an insecticide, the initial insecticidal activity, namely the activity just after the application of the insecticide, may be deteriorated because the penetrating amount of the active ingredient into leaves and the contact frequency between a pest insect and the active ingredient particles on leaves may be generally reduced.

The US-A-5 001 150 discloses a process for preparing dry flowable non-dusty mancozeb granules consisting essentially of preparing an aqueous slurry of solids having a binding agent, a dispersant, paraformaldehyde, zinc sulfate, a surfactant, and maneb, wet milling the thus obtained slurry to obtain particles in the range 2.5-5 microns, adding solids to the milled slurry having essentially the same composition and size as the solids in the milled slurry to obtain a second slurry having a solids concentration of at least about 60% by weight, spray drying the second slurry and thereafter recovering non-dusty mancozeb granules (105-840 micron diameter) having improved aging stability and low ethylene thiourea levels.

The JP-A-63066101 discloses a process for preparing granules of fungicide, herbicide, insecticide, etc., which are obtained by stirring a dispersion of the active ingredients together with rigid body media having particle sizes of less than 0.5 mm, mixing the granules and the dispersing agent with solid carrier, and then subjecting the mixture to granulation.

The JP-A-40-16587 discloses a pulverizing method wherein pre-pulverized material having a low melting point are pulverized into coarse particles with water and a low formula surfactant by mall mill into five particles.

In the JP-A-3-120201 a granular agrochemical component is prepared by (mixing an agrochemical agent in the form of fine subtilae, solid at ordinary temperature, into non-volatile oil to make slurry; and adding the slurry to an oil-absorbing granular carrier to uniformly coat the surface of the carrier with the agrochemical agent.

In the EP 0 843 964 is described a method for preparing water dispersible granules comprising incorporating a pesticidal component being solid at an ambient temperature and hardly-soluble in water, and allowing the mixture obtained to wet milling process, admixing a carrier mineral powder, and a dispersion aid followed by an extrusion process.

As a formulation process for resolving the problems as described above, a process to formulate a water dispersible granule is known, where an active ingredient for an agricultural chemical is pulverized into fine particles under wet milling, kneading the ground active ingredient with a carrier consisting of minerals, and granulating the obtained mixture by extrusion. (See, for example, JP laid-open 3-146126 gazette).

However, when an active ingredient which may be easily decomposed owing to environmental conditions is used for production of a water dispersible granule by kneading the active ingredient with a carrier consisting of minerals following to the wet milling of the active ingredient and then granulating the kneaded product, the residual activity of the active ingredient tends to be remarkably deteriorated due to decomposing effect given by light, water and the like since the particle size of the pulverized active ingredient into fine particles is generally so small as much as 1-5 µm.

Furthermore, constraint of water supply at the wet milling is imposed due to the required amount of bound water at the kneading, thereby further constraining the amount of the active ingredient to be subjected to the wet milling, which has made hard to produce a water dispersible granule containing high content of the active ingredient.

Therefore, if the active ingredient is required to be pulverized into fine particles to enhance the biological activity and is the one that is easily decomposed owing to environmental conditions, it is difficult to obtain a water dispersible granule formulation provided with high initial and residual activities according to a conventional process for preparing water dispersible granule formulations.

Besides, in such cases that (1) a water dispersible granule contains different active ingredients and one of which cannot be pulverized into fine particles by dry milling method, and (2) a water dispersible granule contains different active ingredients, one of which is required to be pulverized into fine particles by wet milling in order to enhance the initial activity, and the other may be pulverized by either wet or dry milling but is required to be pulverized roughly in order to raise the content of the active ingredients in the formulation or enhance the residual activity, it was so hard to employ a process of kneading and granulating materials following to dry milling and a process of kneading and granulating materials following to wet milling for the production of a water dispersible granule formulation.

The water dispersible granule formulation of the present invention is described in claim 1. The process for producing the water dispersible granule formulation of the present invention is described in claim 3.

It is an object of the present invention to provide a water dispersible granule formulation, which can enhance the initial and residual activity of an active ingredient contained in the formulation.

The present invention firstly provides a water dispersible granule formulation containing the same or different active ingredient(s) workable as an agricultural chemical and having different average particle sizes (particle diameter distribution) from one to another.

The water dispersible granule formulation according to the present invention is preferably prepared by mixing and granulating the first active ingredient pulverized into fine particles by wet milling and the second active ingredient pulverized by dry milling.

Further, the average particle size of the first active ingredient is preferably in a range of from 0.5 to 5 µm, and the average particle size of the second active ingredient is preferably in a range of from 3 to 30 µm.

In the water dispersible granule formulation according to the present invention, the first active ingredient is preferably in solid form and hardly soluble in water and the solubility in water is preferably less than 1,000 ppm.

As designative examples for the first active ingredient, one or more compounds selected from a group consisting of triflumizole, thiuram, fluazinam, anilazine, captan, hexythiazox, benzoximate, tebufenpyrad, ziram, thiophanate methyl, mepanipyrim and N'-cyclopropylmethyloxy-N-phenylacetyl-2,3-difluoro-6-trifluoromethylbenzamidine may be given.

As the second active ingredient to be pulverized by dry milling, any compound being in solid state at an ambient temperature and has a melting point higher than 30 °C may be used without limitation, and two or more of such compounds may be used as the second active ingredient.

The present invention secondary provides a process to produce a water dispersible granule formulation comprising steps of combining the first active ingredient, a dispersing agent and water each in a given amount and then grinding the combined mixture under wet milling, combining the second active ingredient, a fine carrier consisting of minerals and a dispersing agent each in a given amount and then pulverizing under dry milling, and mixing the mixture obtained in the wet milling process and the mixture obtained in the dry milling and then granulating the obtained mixture.

In the second invention described above, the process to grind under wet milling preferably contains a process to prepare the average particle size of the active ingredient to a range of from 0.5 to 5 µm, and the process to pulverize under dry milling preferably contains a process to prepare the average particle size of the active ingredient to a range of from 3 to 30 µm.

According to the process of the present invention, the following types of water dispersible granule formulations may be provided.

(1) The water dispersible granule formulation comprising the first active ingredient which is required to be pulverized into fine particles for enhancement of the initial biological activity or cannot be pulverized into fine particles by the dry milling due to the own peculiar property and the second active ingredient which is required to be pulverised into coarse particles for enhancement of the residual activity or to increase the content in the formulation, wherein the first and the second active impedients may be the same or different with each other.

(2) The water dispersible granule formulation, wherein the first and the second active ingredients are the same, which is provided with highly-effective initial biological activity and highly-effective residual activity by means of pulverizing the part of the active ingredient into fine particles by means of the wet milling and of pulverizing the remainder into coarse particles by means of the dry milling.

(3) The water dispersible granule formulation, wherein the first and the second active ingredients are different with each other, the first active ingredient that cannot be pulverized by the dry milling due to the own peculiar property is pulverized into fine particles by means of the wet milling, and the second active ingredient that is required to be pulverized into coarse particles or of which content is required to be increased to enhance the residual activity is pulverized by means of the dry milling.

Preferred Embodiments for the Invention

Now, the present invention is explained in detail in the following.

The present invention is (1) to provide a water dispersible granule formulation provided with highly-effective initial and residual activities comprising the first and the second active ingredients both workable as an agricultural chemical and are the same compound, which is provided with highly-effective initial biological activity and residual activity by preparing the particle size of both active ingredients different with each other by means of wet milling and dry milling, and (2) to provide a water dispersible granule formulation comprising the first and the second active ingredient both workable as an agricultural chemical and are different compounds with each other, wherein the first active ingredient is required to be pulverized into fine particles by means of wet milling in order to enhance its initial biological activity or if it cannot be pulverized by means of dry milling due to the own peculiar property, and the second active ingredient can be pulverized into coarse particles by either wet milling or dry milling but is required to be pulverized in order to enhance its residual activity or to increase its content in the formulation.

The first active ingredient contained in the water dispersible granule formulation according to the present invention is preferably in solid state at an ambient temperature and hardly soluble in water, and more preferably, the active ingredient has solubility in water of 1,000 ppm or less.

As designative examples for the first active ingredient describe above, one or more compounds selected from a group consisting of triflumizole, thiuram, fluazinam, anilazine, captan, hexythiazox, benzoximate, tebufenpyrad, ziram, thiophanate methyl, mepanipyrim and N'-cyclopropylmethyloxy-N-phenylacetyl-2,3-difluoro-6-trifluoromethylbenzamidine may be given.

As the second active ingredient to be contained in the water dispersible granule formulation according to the present invention, any compound being in solid state at an ambient temperature and has a melting point higher than 30 °C may be used without limitation, and two or more of such compounds may be combined, and the similar ones as exampled above for the first active ingredient may be used as the second active ingredient as well.

The first feature of the present invention is directed to the difference in the average particle sizes of the plural active ingredients, or particle size distribution in other word, respectively obtainable by wet milling and dry milling. Consequently, a compound as the first active ingredient and a compound as the second active ingredient to be used may be the same or different with each other.

In the present invention, as examples for the dispersing agent to be combined at the wet milling, polyoxyethylene, polyoxypropylene, copolymer of polyoxyethylene and polyoxypropylene, sodium alkylbenzenesulfonate, alkylphosphoric ester added with polyoxyethylne, aliphatic amines added with polyoxyethylene, aliphatic alcohols added with polyoxyethylene, tween-type surface active agent of sorbitanmonooleate, sorbitantrioleate and the like added with polyoxyethylene, span-type surface active agent of sorbitanmonooleate, sorbitantrioleate and the like , castor oil ester added with polyoxyethylene, tristyrylphenyl ether or distyrylphenyl ether added with polyoxyethylene, tristyrylphenyl ether phosphate added with polyoxyethylene, distyrylphenyl ether sulfate added with polyoxyethylene, alcohol ether added with polyoxyethylene, sodium alkylnaphthalenesulfonate, sodium laurylsulfate, sodium ligninsulfonate, formaldehyde condensate of sodium alkylnaphthalenesulfonate, formaldehyde condensate of sodium phenolsulfonate, copolymer of isobutylene and maleic anhydride, and sodium polycarboxylate may be given, and two or more of the exampled compounds described above may be used in a combination as the dispersing agent.

As examples for the dispersing agent to be combined at the dry milling, sodium alkylnaphthalenesulfonate, sodium alkylbenzenesulfonate, sodium laurylsulfate, sodium ligninsulfonate, formaldehyde condensate of sodium alkylnaphthalenesulfonate, aldehyde condensate of sodium phenolsulfonate, copolymer of isobutylate and maleic anhydride, sodium polycarboxylate, sodium dioctylsulfosuccinate, higher alcohol sulfuric ester sodium and the like may be given, and two or more of the compounds exampled above may be used in combination as the dispersing agent.

As examples for the fine carrier consisting of minerals to be combined at the dry milling process, an inorganic salt, such as potassium chloride, calcium carbonate, ammonium sulfate, potassium phosphate and sodium phosphate, diatomaceous earth, bentonite, pyrophilite-type clay and caolinite-type clay may be given, and two or more of the compounds exampled above may be used in combination as the carrier.

In addition, silicon series surfactants, sodium and calcium salts of a higher fatty acid, the mixture thereof, acetylene-type surfactants, and the like may be added to the water dispersible granule formulation to reduce foaming at the wet milling and at the dilution process.

The contents of each components in the water dispersible granule formulation according to the present invention differ depending on the type of the active ingredient, however, as a ratio relative to the total fumulation, the content of the active ingredient in total is in a range of 0.02-90 wt%, and preferably in a range of 0.02-70 wt%, and the amounts of the active ingredient to be contained at the wet milling process and at the dry milling may be arbitrary varied. The amount of the dispersing agent to be added at the wet milling is in a range of 1-10 wt%, and preferably in a range of 1-5 wt%, and the amount of the dispersing agent to be added at the dry milling is in a range of 1-30 wt%, and preferably in a range of 5-20 wt%. The amount of the carrier comprising fine powder minerals is in a range of 1-50 wt%, and preferably in a range of 10-40 wt%, and the amount of the anti-foaming agent is less than 5 wt% and is preferably less than 3 wt%.

The water dispersible granule formulation, hereinafter might be abbreviated as WDG, of the present invention is produced as explained below.

(1) An active ingredient, a dispersing agent and an anti-foaming agent are dissolved in water, dispersed and then pulverized into fine particles under wet milling to prepare a suspension to be used for the water dispersible granule formulation, said suspension hereinafter might be abbreviated as WDG-SC.

(2) An active ingredient, a dispersing agent and a carrier comprising fine powder minerals are mixed and pulverized under dry milling process to prepare wettable powder to be used for the water dispersible granule formulation, said wettable powder might be abbreviated as WDG-WP.

(3) The obtained WDG-SC is added to the WDG-WP, and the resulting mixture is added with bound water, kneaded by using a kneader, and passed through multiporous plate containing pores each of which diameter is ranging from 0.5 to 2.0 mm to obtain granulated moist mixture in noodle-like shape, and the granulated mixture is dried by using an appropriate dryer to obtain the objective water dispersible granule formulation.

As a granulation method, any method may be employed if it has been used in producing granular formulation for an active ingredient for plant protection use. As examples for the granulation method, extrusion, agitation, breaking, fluid bed, spray dryer, etc. may be given. The particle size and the appearance of the granular formulation may be arbitrary modified depending upon the objective use, such as the type of an active ingredient and the dilution process.

Examples:

Now, the present invention is further described in detail with referring the examples in the following, however, it should be noted that the scope of the present invention is not limited to the description in the examples, and the first and the second active ingredients, various types of additives, and the combination ratio may be modified without limitation as far as the modification does not exceed the scope of the subject matter of the present claims.

Example 1

N'-cyclopropylmethyloxy-N-phenylacetyl-2,3-difluoro-6-trifluoromethylbenzamidine, (hereinafter designated as "compound A"), in an amount of 100g, tristyrylphenyl ether added with polyoxyethylene of which HLB being 15 more or less in an amount of 10g, sodium polycarboxylate in an amount of 10g and a silicon series anti-foaming agent in an amount of 2.5g were mixed and added with distilled water in an amount of 150g, and the resulting mixture was dissolved and dispersed by using polytron. The dispersed mixture was then pulverized into fine particles under wet milling wherein zircon beads with a diameter of 1 mm are used by using Eiger motor mill (manufactured by EIGER JAPAN Co. Ltd.) to prepare the WDG-SC of the compound A having the average particle size of 1.5 μm.

Then, triflumizole in an amount of 100g, sodium alkylnaphthalenesulfonate in an amount of 10g, formaldehyde condensate of sodium alkylnaphthalenesulfonate in an amount of 140g, sodium ligninsulfonate in an amount of 80g, diatomaceous earth in an amount of 300g and potassium chloride in an amount of 237.5g were mixed and then pulverized into coarse particles under dry milling to prepare the WDG-WP containing triflumizole, wherein the average particle size of particles containing triflumizole is 7 μm.

To the obtained WDG-WP in am amount of 877.5g, the WDG-SC (272.5g) obtained above and distilled water (180g) were added, and the resulting mixture was then kneaded by using Bench Kneader (manufactured by Irie Shokai Co. Ltd.), granulated into moist granular product in noodle-like shape with a diameter of 0.6 mm by using micro-type granule preparation apparatus (manufactured by Tsutsui Rikagaku Kikai Co., Ltd.) and dried at 40°C for 12 hours by using a blowing drier to prepare the WDG (WDG-1) of the Example 1.

Example 2

The compound A in an amount of 100g, distyrylphenyl ether added with polyoxyethylene of which HLB being 15 more or less in an amount of 10g, sodium polycarboxylate in an amount of 10g and silicon series anti-foaming agent in an amount of 2.5g were mixed and added with distilled water in an amount of 150g, and the resulting mixture was pulverized into fine particles under wet milling according to the same procedure as described in the Example 1 to prepare the WDG-SC of the compound A having the average particle size of 3.0 μm.

Then, triflumizole in an amount of 300g, sodium alkylnaphthalenesulfonate in an amount of 10g, sodium alkylbenzenesulfonate in an amount of 10g, formaldehyde condensate of sodium alkylnaphthalenesulfonate in an amount of 140g, sodium ligninsulfonate in an amount of 80g, diatomaceous earth in an amount of 200g and potassium chloride in an amount of 137.5g were mixed and then pulverized into coarse particles according to the same process as described in the Example 1 to prepare the WDG-WP containing triflumizole, wherein the average particle size of particles containing triflumizole is 6 μm.

Then, the obtained WDG-WP in an amount of 877.5g was added with the WDG-SC in an amount of 272.6g and distilled water in an amount of 150g, and the resulting mixture was processed according to the procedure as described in the Example 1 to prepare the WDG (WDG-2) of the Example 2.

Example 3

The compound A in an amount of 150g, tristyrylphenyl ether added with polyoxyethylene of which HLB being 15 more or less in an amount of 10g, sodium polycarboxylate in an amount of 10g and silicon series anti-foaming agent in an amount of 2.5g were mixed and then added with distilled water in an amount of 125g, and the resulting mixture was pulverized into fine particles under wet milling according to the same procedure as described in the Example 1 to prepare the WDG-SC containing the compound A having the average particle size of 1.5 μm.

Then, thiophanate methyl in an amount of 600g, sodium alkylnaphthalenesulfonate in an amount of 10g, formaldehyde condensate of sodium alkylnaphthalenesulfonate in an amount of 50g, sodium ligninsulfonate in an amount of 25g, calcium carbonate in an amount of 100g and potassium chloride in an amount of 42.5g were mixed and then pulverized into coarse particles under dry milling according to the same procedure as described in the Example 1 to prepare the WDG-WP containing thiophanate methyl of which particles having the average particle size of 7 μm.

To the obtained WDG-WP in an amount of 827.5g, the WDG-SC in an amount of 297.6g and distilled water in an amount of 75g were added to obtain the WDG (WDG-3) of the Example 3 according to the same procedure as described in the Example 1.

Example 4

Triflumizole in an amount of 100g, block copolymer of polyoxyethylene of which HLB being 14 more or less and polyoxypropylene in an amount of 50g, formaldehyde condensate of sodium phenolsulfonate in an amount of 70g and silicon series anti-foaming agent in an amount of 2.5g were mixed and then added with distilled water in an amount of 200g, and the resulting mixture was pulverized into fine particles under wet milling according to the same procedure as described in the Example 1 to prepare the WDG-SC containing triflumizole of which average particle size being 5.0 μm.

Then, thiophanate methyl in an amount of 600g, sodium alkylnaphthalenesulfonate in an amount of 10g, formaldehyde condensate of sodium alkylnaphthalenesulfonate in an amount of 25g, sodium ligninsulfonate in an amount of 25g, calcium carbonate in an amount of 100g and potassium chloride in an amount of 17.5g were mixed and then pulverized into coarse particles under dry milling according to the same procedure as described in the Example 1 to prepare the WDG-WP containing thiophanate methyl of which particles having the average particle size of 7 μm.

To the obtained WDG-WP in an amount of 777.5g, the WDG-SC in an amount of 422.5g and distilled water in an amount of 30g were added to obtain the WDG (WDG-4) of the Example 4 according to the same procedure as described in the Example 1.

Example 5

Triflumizole in an amount of 100g, tristyrylphenyl ether added with polyoxyethylene of which HLB being 15 more or less in an amount of 10g, sodium polycarboxylate in an amount of 10g and silicon series anti-foaming agent in an amount of 2.5g were mixed and then added with distilled water in an amount of 150g, and the resulting mixture was pulverized into fine particles under wet milling according to the same procedure as described in the Example 1 to prepare the WDG-SC containing triflumizole of which average particle size being 2 μm.

Then, triflumizole in an amount of 200g, sodium alkylnaphthalenesulfonate in an amount of 20g, sodium alkylbenzenesulfonate in an amount of 10g, formaldehyde condensate of sodium alkylnaphthalenesulfonate in an amount of 140g, sodium ligninsulfonate in an amount of 80g, diatomaceous earth in an amount of 300g and potassium chloride in an amount of 127.5g were mixed and then pulverized into coarse particles under dry milling according to the same procedure as described in the Example 1 to prepare the WDG-WP of which particles containing triflumizole having the average particle size of 8 µm.

To the obtained WDG-WP in an amount of 877.5g, the WDG-SC obtained above in an amount of 272.5g and distilled water in an amount of 180g were added, and the resulting mixture was kneaded by using Bentch Kneader (manufactured by Irie Shokai Co., Ltd.) and granulated into the moist noodle-shaped product having the diameter of 0.6 mm by using a micro-type granules preparation apparatus (manufactured by Tsutsui Rikagaku Kikai Co., Ltd.) and dried at 40°C for 12 hours by using a blowing dryer to obtain the WDG (WDG-5) of the Example 5.

Example 6

Thiophanate methyl in an amount of 100g, tristyrylphenyl ether added with polyoxyethylene of which HLB being 15 more or less in an amount of 10g, sodium polycarboxylate in an amount of 10g and silicon series anti-foaming agent in an amount of 2.5g were mixed and then added with distilled water in an amount of 150g, and the resulting mixture was pulverized into fine particles under wet milling according to the same procedure as described in the Example 1 to prepare the WDG-SC containing triflumizole of which average particle size being 2 µm.

Then, thiophanate methyl in an amount of 600g, sodium alkylnaphthalenesulfonate in an amount of 10g, formaldehyde condensate of sodium alkylnaphthalenesulfonate in an amount of 50g, sodium ligninsulfonate in an amount of 25g, calcium carbonate in an amount of 100g and potassium chloride in an amount of 92,5g were mixed and then pulverized into coarse particles under dry milling according to the same procedure as described in the Example 1 to prepare the WDG-WP of which particles containing thiophanate methyl having the average particle size of 7 µm.

To the obtained WDG-WP in an amount of 877.5g, the WDG-SC obtained above in an amount of 272.5g and distilled water in an amount of 150g were added to obtain the WDG (WDG-6) of the Example 6 according to the same procedure as described in the Example 1.

The compositions of the formulations obtained in the examples described above are shown in Table 1.

Table 1

| Example | 1 | 2 | 3 | 4 | 5 | 6 |
|---|---|---|---|---|---|---|
| WDG-SC | | | | | | |
| Compound A | 100 | 100 | 150 | | | |
| Triflumizole | | | | 100 | 100 | |
| Thiophanate methyl | | | | | | 100 |
| POE trismylphenyl ether | 10 | | 10 | | 10 | 10 |
| POE distyrylphenyl ether | | 10 | | | | |
| POE-POP block copolymer | | | | 50 | | |
| Formaldehyde condensate of Sodium phenolsulfonate | | | | 70 | | |
| Sodium polycarboxylate | 10 | 10 | 10 | | 10 | 10 |
| Silicon-containing defoaming agent | 2.5 | 2.5 | 2.5 | 2.5 | 2.5 | 2.5 |
| Distilled water | 150 | 150 | 125 | 200 | 150 | 150 |
| Average particle size (µm) | 1.5 | 3.0 | 1.5 | 5.0 | 2.0 | 2.0 |
| WDG-WP | | | | | | |
| Triflumizole | 100 | 300 | | | 200 | |
| Thiophanate methyl | | | 600 | 600 | | 600 |
| Sodium alkylnaphthalenesulfonate | 10 | 10 | 10 | 10 | 20 | 10 |
| Sodium alkylbenzenesulfonate | 10 | 10 | | | 10 | |
| Sodium ligninsulfonate | 80 | 80 | 25 | 25 | 80 | 25 |
| Formaldehyde condensate of Sodium naphthalenesulfonate | 140 | 140 | 50 | 25 | 140 | 50 |
| Diatomaceous earth | 300 | 200 | | 200 | 300 | |
| Calcium carbonate | | | 100 | 100 | | 100 |

Table 1   (continued)

| Example | 1 | 2 | 3 | 4 | 5 | 6 |
|---|---|---|---|---|---|---|
| WDG-WP | | | | | | |
| Potassium chloride | 237.5 | 137.5 | 42.5 | 17.5 | 127,5 | 92.5 |
| Average particle size (μm) | 7.0 | 6.0 | 7.0 | 7.0 | 8.0 | 7.0 |
| POE: Polyoxyethylene,        POP: Polyoxypropylene | | | | | | |

The formulation examples for the water dispersible granule according to the present invention, which can be prepared in the same manner as the examples described above, are shown in Table 2.

The water to be contained in the WDG-SC is required to make the pulverized mixture into fine particles under wet milling in slurry state and the amount might be selected in a range of from 100 to 300g. The particle size of the active ingredient in the WDG-SC may be adjusted depending on the objective for the use. The amount of water to be added after the mixing of the WDG-WP and the WDG-SC into the mixture is required to be appropriate for making the kneaded product in argillaceous state.

Table 2

| Example | 7 | 8 | 9 | 10 | 11 | 12 |
|---|---|---|---|---|---|---|
| WDG-SC | | | | | | |
| Clethoxim methyl | 100 | | | | | |
| Mepanipyrim | | 100 | 200 | | | |
| Thiuram | | | | 100 | | |
| Hexythiazox | | | | | 100 | 150 |
| POE tristyrylphenyl ether | 10 | 10 | 10 | | | 10 |
| Sodium polycarboxylate | 10 | 10 | 10 | | 20 | |
| POE-POP block copolymer | | | | 50 | | 20 |
| Formaldehyde condensate of Sodium phenolsulfonate | | | | 70 | | 50 |
| Sodium alkylnaphthalenesulfonate | | | | | 20 | |
| | | | | | | |
| WDG-WP | | | | | | |
| Triflumizole | 300 | | | | | |
| Thiophanate methyl | | 600 | 500 | | | |
| Acetamiprid | | | | | 300 | 400 |
| Fluazinam | | | | 200 | | |
| Sodium alkylnaphthalenesulfonate | 20 | 10 | 10 | 20 | 20 | 10 |
| Sodium ligninsulfonate | 100 | 25 | 25 | 80 | 80 | 100 |
| Formaldehyde condensate of Sodium naphthalenesulfonate | 200 | 50 | 50 | 150 | 80 | 100 |
| Calcium carbonate | 200 | 100 | 100 | | | |
| Diatomaceous earth | | | | 200 | | |
| Clay | | | | | 200 | 100 |
| Ammonium sulfate | | | | 130 | | |
| Potassium chloride | 60 | 95 | 95 | | 180 | 60 |

Industrial Use:

Now, the advantageous effect of the present invention is explained in the following with referring the comparative examples and the comparative test examples with the examples described above.

Comparative Example 1 (Same composition as Example 1, but the active ingredient is pulverized into fine particles under wet milling together with other components.)

The compound A in an amount of 100g, triflumizole in an amount of 100g, tristyrylphenyl ether added with polyoxyethylene of which HLB being 15 more or less in an amount of 10g, sodium polycarboxylate in an amount of 10g and silicon series anti-foaming agent in an amount of 2.5g were mixed and then added with distilled water in an amount of 300g, and the resulting mixture was pulverized into fine particles under wet milling according to the same procedure as described in the Example 1 to prepare the WDG-SC containing the active ingredient of which average particle size being 1.5 $\mu$m.

Then, sodium alkylnaphthalenesulfonate in an amount of 10g, sodium alkylbenzenesulfonate in an amount of 10g, formaldehyde condensate of sodium alkylnaphthalenesulfonate in an amount of 140g, sodium ligninsulfonate in an amount of 80g, diatomaceous earth in an amount of 300g and potassium chloride in an amount of 237.5g were mixed and then pulverized into fine particles under dry milling according to the same procedure as described in the Example 1 to prepare a powder formulation of which particles having the average particle size of 7 $\mu$m.

To the obtained powder formulation in an amount of 777.5g, the WDG-SC obtained above in an amount of 522.5g and distilled water in an amount of 30g were added to obtain the WDG (WDG-comparison 1) of the Comparative Example 1 according to the same procedure as described in the Example 1.

Test Example 1

The two types of WDG each in an amount of 1g, the WDG (WDG-1) prepared in the Example 1 and the WDG (WDG-comparison 1) prepared in the Comparative Example 1, were separately added into 100 ml tap water and were dispersed while shaking. 1 ml of the obtained dispersion was placed into a petri dish with a diameter of 9 cm and dried at an ambient temperature. Then, the dispersion was exposed to sunlight (approximately 100,000 lux) and the remaining amount of the compound A on the petri dish was determined at a fixed interval by means of HPLC analysis. The remaining ratio of the compound A based on the amount of triflumizole before exposing to sunlight is shown in Table 3.

| Table 3 | | |
| --- | --- | --- |
| Sunlight Irradiation Time (hr) | WDG-1 | WDG-comparison 1 |
| 0 | 100% | 100% |
| 3 | 96% | 67% |
| 6 | 89% | 44% |

From the Table 3, it is demonstrated that the water dispersible granule formulation prepared according to the Example 1 is stable against sunlight and can show excellent residual activity in comparison with the WDG prepared in the Comparative Example 1.

Comparative Example 2 (Example of the WDG containing the same active ingredient as one in the Example 2 prepared by dry milling)

The compound A in an amount of 100g, triflumizole in an amount of 300g, sodium alkylnaphthalenesulfonate in an amount of 20g, formaldehyde condensate of sodium alkylnaphthalenesulfonate in an amount of 140g, sodium ligninsulfonate in an amount of 100g, calcium carbonate in an amount of 200g and potassium chloride in an amount of 140g were mixed and then pulverized under dry milling according to the same procedure as described in the Example 1. However, the part of the compound A was not pulverized well and the particles having the particle size being larger than several hundreds $\mu$m remained in the pulverized powder, and therefore, it was not successful to prepare the water dispersible granule according to this process.

Comparative Example 3 (Example of the WDG containing the same active ingredient as one in the Example 3 prepared by dry pulverization)

The compound A in an amount of 150g, thiophanate methyl in an amount of 600g, sodium alkylnaphthalenesulfonate in an amount of 10g, formaldehyde condensate of sodium alkylnaphthalenesulfonate in an amount of 50g, sodium ligninsulfonate in an amount of 25g, calcium carbonate in an amount of 100g and potassium chloride in an amount of 65g were mixed and then pulverized under dry milling according to the same procedure as described in the Example 1. However, the part of the compound A was not pulverized well and the particles having the particle size being larger than several hundreds μm remained in the pulverized powder, and therefore, it was not successful to prepare the water dispersible granule according to this process.

Comparative Example 4 (Example of WDG containing the same active ingredient as one in the Example 4 prepared by wet grinding)

Triflumizole in an amount of 100g, thiophanate methyl in an amount of 600g, block copolymer of polyoxyethylene of which HLB being 14 more or less and polyoxypropylene in an amount of 50g, formaldehyde condensate of sodium phenolsulfonate in an amount of 70g, tristyrylphenyl ether added with polyoxyethylene of which HLB being 15 more or less in an amount of 10g and silicon series anti-foaming agent in an amount of 2.5g were mixed and then added with distilled water to be required for preparing the WDG-SC, then the total amount of the mixture came to 700g. The mixture was then pulverized under wet milling to prepare the WDG-SC containing the active ingredient having the average particle size of 5 μm.
Then, the WDG-SC was mixed with calcium carbonate in an amount of 100g and potassium chloride in an amount of 67.5g, and the mixture was pulverized under dry milling to prepare a powder formulation of which particles having the average particle size of 5 μm.
To the obtained powder formulation, the WDG-SC obtained above in an amount of 1,532.5g was added, however, the resulting mixture was not prepared into argillaceous state during the kneading process due to the presence of excessive water since the water amount in the WDG-SC exceeded the required water amount for the preparation of the WDG, which accordingly make unable to prepare the moist noodle-shaped product for granulation, and therefore, it was not successful to prepare the water dispersible granule according to this process.

Comparative Example 5 (WDG containing triflumizole of which particle size being 2 μm)

Triflumizole in an amount of 100g, trisyrylphenyl ether added with polyoxyethylene of which HLB being 15 more or less in an amount of 10g, sodium polycarboxylate in an amount of 10g and silicon series anti-foaming agent in an amount of 2.5g were mixed and then added with distilled water in an amount of 150g, and the resulting mixture was pulverized under wet milling according to the same procedure as described in the Example 1 to prepare the WDG-SC containing the active ingredient having the average particle size of 2 μm.
Then, sodium alkylnaphthalenesulfonate in an amount of 20g, sodium alkylbenzenesulfonate in an amount of 10g, formaldehyde condensate of sodium alkylnaphthalenesulfonate in an amount of 140g, sodium ligninsulfonate in an amount of 80g, diatomaceous earth in an amount of 300g and potassium chloride in an amount of 327.5g were mixed and then pulverized under dry milling according to the same procedure as described in the Example 1 to prepare the powder formulation of which particles having the average particle size of 8 μm. The obtained powder formulation was then added with the WDG-SC obtained above in an amount of 272.5g and distilled water in an amount of 200g to prepare the WDG (WDG-comparison 5) of the Comparative Example 5 according to the same procedure as described in the Example 1.

Comparative Example 6 (WDG containing triflumizole with the average particle size of 8 μm)

Triflumizole in an amount of 300g, sodium alkylnaphthalenesulfonate in an amount of 20g, sodium alkylbenzenesulfonate in an amount of 10g, formaldehyde condensate of sodium alkylnaphthalenesulfonate in an amount of 140g, sodium ligninsulfonate in an amount of 80g, diatomaceous earth in an amount of 300g and potassium chloride in an amount of 150g were mixed, and the mixture was pulverized under dry milling to prepare the WG-WP of which particles containing triflumizole having the average particle size of 8 μm. The obtained WG-WP in an amount of 1,000g was added with distilled water in an amount of 240g to prepare the WDG (WDG-comparison 6) of the Comparative Example 6 according to the same procedure as described in the Example 1.

Test Example 2

Each of WDG containing triflumizole prepared in the Example 5 (WDG-5) and the Comparative Examples 5 and 6 (WDG-comparison 6 and WDG-comparison 6) was separately diluted at a predetermined concentration and was sprayed to apple fruits. After naturally drying the sprayed apple fruits, the spore suspension of apple scab fungus (spore concentration, 1 x 10$^5$/ml) was sprayed onto the apples on 0 and 3 days after spraying of the WDG. On 11 days later, the appearance of the infection by apple scab fungus was accessed, and the disease control efficacy in the plots sprayed with the WDG was evaluated in comparison with the plot without spraying of the WDG according to the equation presented below. The results are shown in Table 4. The preventive effect (initial activity) may be known from the effectiveness when the inoculation of the spore suspension was made just after the spraying of the WDG (0 day) and the residual effect may be known from the effectiveness when the inoculation of the spore suspension was made on 3 days after the spraying of the WDG.

Disease Control Efficacy = (1 - (Area covered by scab fungus infection on the WDG-

sprayed apples / Area covered by scab fungus infection on apples without spray of the

WDG)) x 100

Table 4

| Formulation | Concentration of Active Ingredient Sprayed (ppm) | Disease Control Efficacy (%) | |
|---|---|---|---|
| | | Preventive effect (Initial activily) | Residual effect |
| WDG-5 | 50 | 100 | 100 |
| | 12 | 100 | 20 |
| | 3 | 95 | 0 |
| WDG-comparison 5 | 50 | 100 | 75 |
| | 12 | 100 | 0 |
| | 3 | 90 | 0 |
| WDG-comparison 6 | 50 | 100 | 100 |
| | 12 | 100 | 12 |
| | 3 | 50 | 0 |

As shown in the Table 4, the water dispersible granule formulation (WDG-5) prepared in the Example 5 showed excellent residual effectiveness in comparison with the corresponding formulation (WDG-comparison 5) prepared in the Comparative Example 5 and excellent initial effectiveness in comparison with the formulation (WDG-comparison 6) prepared in the Comparative Example 6.

Comparative Example 7 (WDG containing thiophanate methyl with the average particle size of 2 μm)

Thiophanate methyl in an amount of 100g, tristyrylphenyl ether added with polyoxyethylene of which HLB being 15 more or less in an amount of 10g, sodium polycarboxylate in an amount of 10g and silicon series anti-foaming agent in an amount of 2.5g were mixed and the mixture was then added with distilled water in an amount of 150g, and the resulting mixture was pulverized under wet milling according to the same procedure as described in the Example 1 to prepare the WDG-SC containing the active ingredient with the average particle size of 2 μm.
Then, sodium alkylnaphthalenesulfonate in an amount of 10g, formaldehyde condensate of sodium alkylnaphthalenesulfonid acid in an amount of 100g, sodium ligninsulfonate in an amount of 25g, calcium carbonate in an amount of 100g and potassium chloride in an amount of 115g were mixed, and the resulting mixture was pulverized under dry milling according to the same procedure as described in the Example 1 to prepare the powder formulation of which particles having the average particle size of 7 μm. The obtained powder formulation in an amount of 877.5g was added with the above-obtained WDG-SC in an amount of 272.5g and distilled water in an amount of 180g to obtain the WDG of the Comparative Example 7 (WDG-comparison 7) according to the same procedure as described in the Example 1.

Comparative Example 8 (WDG containing thiophanate methyl with the average particle size of 7 μm)

Thiophanate methyl in an amount of 700g, sodium alkylnaphthalenesulfonate in an amount of 10g, formaldehyde condensate of alkylnaphthalenesulfonic acid in an amount of 50g, sodium ligninsulfonate in an amount of 25g, calcium carbonate in an amount of 100g and potassium chloride in an amount of 115g were mixed, and the resulting mixture was pulverized under dry milling to prepare the WDG-WP of which particles having the average particle size of 7 μm. The obtained WDG-WP in an amount of 1,000g was added with distilled water in an amount of 300g to prepare the WDG of the Comparative Example 8 (WDG-comparison 8) according to the same procedure as described in the Example 1.

Test Example 3

Each of WDG containing thiophanate methyl prepared in the Example 6 (WDG-6) and the Comparative Examples 7 and 8 (WDG-comparison 7 and WDG-comparison 8) was separately diluted at a predetermined concentration and the dilution was sprayed to sugarbeet plants (variety; Monohomare). After naturally drying the sprayed sugarbeet plants, the spore suspension of Cercospora leaf spot fungus (spore concentration, $1 \times 10^5$/ml) was sprayed onto the sugarbeet plants on 0 and 7 days after spraying of the WDG. On 11th day after the spraying, the appearance of the infection by Cercospora leaf spot fungus was accessed, and the disease control efficacy in the plots sprayed with the WDG was evaluated in comparison with the plot without spraying of the WDG according to the equation presented in the Test Example 1. The results are shown in Table 5. The preventive effect (initial activity) may be known from the effectiveness when the inoculation of the spore suspension was made just after the spraying of the WDG (0 day) and the residual effect may be known from the effectiveness when the inoculation of the spore suspension was made on 7 days after the spraying of the WDG.

Table 5

| Formulation | Concentration of Active Ingredient Sprayed (ppm) | Disease Control Efficacy (%) | |
|---|---|---|---|
| | | Preventive Effect (Initial Activity) | Residual Effect |
| WDG-6 | 200 | 100 | 100 |
| | 50 | 100 | 85 |
| | 12 | 100 | 0 |
| | 3 | 80 | 0 |
| WDG-comparison 7 | 200 | 100 | 95 |
| | 50 | 100 | 20 |
| | 12 | 100 | 0 |
| | 3 | 82 | 0 |
| WDG-comparison 8 | 200 | 100 | 100 |
| | 50 | 100 | 82 |
| | 12 | 75 | 0 |
| | 3 | 19 | 0 |

In the Table 5, the water dispersible granule formulation (WDG-6) prepared in the Example 6 showed excellent residual effectiveness in comparison with the corresponding formulation (WDG-comparison 7) prepared in the Comparative Example 7 and excellent initial effectiveness in comparison with the formulation (WDG-comparison 8) prepared in the Comparative Example 8.

As explained above, the present invention is directed to a process for producing a water dispersible granule formulation for agricultural chemical use, particularly comprising an active ingredient easily decomposed owing to environmental conditions, which is suitable for preparing a water dispersible granule formulation, wherein the active ingredient is required to be pulverized into fine particles in order to enhance the initial biological activity and is also required to be pulverized into coarse particles in order to enhance the residual activity. According to the present invention, the part of the active ingredients may be pulverized into fine particles under wet milling, and the other part of the active ingredients may be pulverized into coarse particles under dry milling, then kneading the both active ingredients to prepare the granules containing the both active ingredients, thereby allowing to simply and efficiently produce a water dispersible granule containing different types of particles having different particle sizes, respectively.

# EP 1 157 612 B1

## Claims

1.  A water dispersible granule formulation of agricultural chemicals, the formulation comprising:

    a homogeneous granulation comprising a first wet milled active ingredient and a second pulverized dry milled active ingredient of particles coarser than said first active ingredient, the first and second active ingredients being either the same or different active ingredients;
    the formulation having a particle size distribution wherein each of the first and second active ingredients have two different average particle sizes;
    the average particle size of the first active ingredient having a value from 0.5 µm to 5 µm,
    the average particle size of the second active ingredient having a value from 3 µm to 30 µm, and
    the first active ingredient being a compound which is a solid at an ambient temperature and has a solubility in water of 1,000 ppm or less.

2.  The formulation according to claim 1, wherein the first active ingredient is selected from a group consisting of triflumizole, thiuram, fluazinam, anilazine, captan, hexythiazox, benzoximate, tebufenpyrad, ziram, thiophanate methyl, mepanipyrim, clethoxim methyl, and N'-cyclopropylmethyloxy-N-phenylacetyl-2,3-difluoro-6-trifluoromethylbenzaminidine and combinations thereof.

3.  A process for producing a water dispersible granule formulation comprising the steps of:

    wet milling a combined mixture of a first active ingredient, a dispersing agent and water, pulverizing a combined mixture of a second active ingredient, a mineral carrier and a dispersing agent under dry milling, and admixing the mixture obtained in the wet milling step and the mixture obtained in the dry milling step, and then drying the admixed mixture to form a homogeneous granule formulation,

    wherein the first active ingredient is pulverized to an average particle size value from 0.5 µm to 5 µm,
    wherein the second active ingredient is pulverized to an average particle size value from 3 µm to 30 µm,
    wherein the first active ingredient is a compound which is a solid at an ambient temperature and has a solubility in water of 1,000 ppm or less and
    wherein the first and second active ingredients are either the same or different active ingredients.

4.  The process according to claim 3, wherein the first active ingredient is selected from a group consisting of triflumizole, thiuram, fluazinam, anilazine, captan, hexythiazox, benzoximate, tebufenpyrad, ziram, thiophanate methyl, mepanipyrim, clethoxim methyl, and N'-cyclopropylmethyloxy-N-phenylacetyl-2,3-difluoro-6-trifluoromethylbenzaminidine and combinations thereof.

## Patentansprüche

1.  Eine wasserdispergierbare Granulatrezeptur landwirtschaftlicher Chemikalien, wobei die Rezeptur folgendes umfasst:

    eine homogene Granulation, umfassend einen ersten nassgemahlenen aktiven Inhaltsstoff und einen zweiten pulverisierten trockengemahlenen aktiven Inhaltsstoff aus Partikeln, die grober sind als besagter erster aktiver Inhaltsstoff, wobei der erste und zweite aktive Inhaltsstoff entweder derselbe oder unterschiedliche aktive Inhaltsstoffe sind;
    die Rezeptur eine Partikelgrößenverteilung aufweist, wobei jeder des ersten und zweiten aktiven Inhaltsstoffs zwei verschiedene durchschnittliche Partikelgrößen hat;
    die durchschnittliche Partikelgröße des ersten aktiven Inhaltsstoffs einen Wert von 0,5 µm bis 5 µm hat;
    die durchschnittliche Partikelgröße des zweiten aktiven Inhaltsstoffs einen Wert von 3 µm bis 30 µm hat, und
    der erste aktive Inhaltsstoff eine Verbindung ist, die auf Zimmertemperatur ein Feststoff ist und eine Löslichkeit in Wasser von 1.000 ppm oder weniger aufweist.

2.  Die Rezeptur gemäß Anspruch 1, wobei der erste aktive Inhaltsstoff aus einer aus Triflumizol, Thiuram, Fluazinam, Anilazin, Captan, Hexythiazox, Benzoximat, Tebufenpyrad, Ziram, Thiophanatmethyl, Mepanipyrim, Clethoximmethyl und N'-Cyclopropylmethyloxy-N-phenylacetyl-2,3-difluor-6-trifluormethylbenzaminidin und Kombinationen davon bestehenden Gruppe gewählt ist.

**3.** Ein Prozess zur Herstellung einer wasserdispergierbaren Granulatrezeptur, der folgende Schritte umfasst:

das Nassmahlen eines kombinierten Gemischs eines ersten aktiven Inhaltsstoffs, eines Dispergiermittels und Wasser, das Pulverisieren eines kombinierten Gemischs eines zweiten aktiven Inhaltsstoffs, eines mineralischen Trägers und eines Dispergiermittels durch Trockenmahlen, und das Vermischen des in dem Nassmahlschritt erhaltenen Gemischs und des in dem Trockenmahlschritt erhaltenen Gemischs, und dann das Trocknen des vermischten Gemischs, um eine homogene Granulatrezeptur zu bilden,

wobei der erste aktive Inhaltsstoff zu einem durchschnittlichen Partikelgrößenwert von 0,5 μm bis 5 μm pulverisiert ist,

wobei der zweite aktive Inhaltsstoff zu einem durchschnittlichen Partikelgrößenwert von 3 μm bis 30 μm pulverisiert ist,

wobei der erste aktive Inhaltsstoff eine Verbindung ist, die auf einer Umgebungstemperatur ein Feststoff ist und eine Löslichkeit in Wasser von 1.000 ppm oder weniger besitzt, und

wobei der erste und zweite aktive Inhaltsstoff entweder dieselben oder unterschiedliche aktive Inhaltstoffe sind.

**4.** Der Prozess gemäß Anspruch 3, wobei der erste aktive Inhaltsstoff aus einer aus Triflumizol, Thiuram, Fluazinam, Anilazin, Captan, Hexythiazox, Benzoximat, Tebufenpyrad, Ziram, Thiophanatmethyl, Mepanipyrim, Clethoximmethyl und N'-Cyclopropylmethyloxy-N-phenylacetyl-2,3-difluor-6-trifluormethylbenzaminidin und Kombinationen davon bestehenden Gruppe gewählt ist.

**Revendications**

**1.** Formulation de produits chimiques agricoles sous la forme de granulés dispersibles dans l'eau, la formulation comprenant :

un produit de granulation homogène comprenant un premier ingrédient actif broyé à l'état humide et un deuxième ingrédient actif broyé à l'état sec et pulvérisé, dont les particules sont plus grosses que celles dudit premier ingrédient actif, les premier et deuxième ingrédients actifs représentant, soit les mêmes ingrédients actifs, soit des ingrédients actifs différents ;
le produit de formulation possède une distribution granulométrique dans laquelle chacun des premier et deuxième ingrédients actifs possède deux granulométries moyennes différentes ;
la première granulométrie moyenne du premier ingrédient actif possède une valeur de 0,5 μm à 5 μm ;
la granulométrie moyenne du deuxième ingrédient actif possède une valeur de 3 μm à 30 μm ; et
le premier ingrédient actif représente un composé qui est solide à la température ambiante et qui possède une solubilité dans l'eau de 1000 ppm ou moins.

**2.** Formulation selon la revendication 1, dans laquelle le premier ingrédient actif est choisi parmi le groupe constitué par le triflumizole, le thiuram, le fluazinam, l'anilazine, le captan, l'hexythiazox, le benzoximate, le tebufenpyrad, le ziram, le thiophanate méthyle, le mepanipyrim, le clethoxim méthyle, la triazine et la N'-cyclopropylméthyloxy-N-phénylacétyl-2,3-difluoro-6-trifluorométhylbenzamidine et leurs combinaisons.

**3.** Procédé pour la production d'une formulation de granulés dispersibles dans l'eau, comprenant les étapes consistant à :

broyer à l'état humide un mélange combiné d'un premier ingrédient actif, d'un agent de mise en dispersion et d'eau, pulvériser un mélange combiné d'un deuxième ingrédient actif, d'un support minéral et d'un agent de mise en dispersion dans des conditions de broyage à sec, et additionner le mélange obtenu dans l'étape de broyage à l'état humide et le mélange obtenu dans l'étape de broyage à sec, et ensuite sécher le mélange obtenu par addition pour obtenir une formulation de granulés homogène,

dans lequel le premier ingrédient actif est pulvérisé pour obtenir une granulométrie moyenne de 0,5 μm à 5 μm ;
dans lequel le deuxième ingrédient actif est pulvérisé pour obtenir une granulométrie moyenne de 3 μm à 30 μm ;
dans lequel le premier ingrédient actif est un composé qui est solide à la température ambiante et qui possède une solubilité dans l'eau de 1000 ppm ou moins ; et

dans lequel les premier et deuxième ingrédients actifs représentent, soit des ingrédients actifs identiques, soit des ingrédients actifs différents.

4. Procédé selon la revendication 3, dans lequel le premier ingrédient actif est choisi parmi le groupe constitué par le triflumizole, le thiuram, le fluazinam, l'anilazine, le captan, l'hexythiazox, le benzoximate, le tebufenpyrad, le ziram, le thiophanate méthyle, le mepanipyrim, le clethoxim méthyle et la N'-cyclopropylméthyloxy-N-phénylacétyl-2,3-difluoro-6-trifluorométhylbenzamidine et leurs combinaisons.